# FASCICULE DE BREVET EUROPEEN

(11) **EP 3 842 290 B1**
(45) Date de publication et mention de la délivrance du brevet: **27.09.2023**
(21) Numéro de dépôt: 20216512.2
(22) Date de dépôt: 22.12.2020
(51) Int. Cl.: B60R 13/02

(54) **ELÉMENT DE GARNISSAGE POUR VÉHICULE COMPRENANT UNE COUTURE ET UN ÉLÉMENT DE PROTECTION DE LA COUTURE**
POLSTERELEMENT FÜR FAHRZEUG, DAS EINE NAHT UND EIN SCHUTZELEMENT DIESER NAHT UMFASST
TRIM ELEMENT FOR A VEHICLE INCLUDING A SEAM AND AN ELEMENT FOR PROTECTING THE SEAM

(30) Priorité: 23.12.2019 FR 1915443
(43) Date de publication de la demande: 30.06.2021
(73) Titulaire: Faurecia Intérieur Industrie, 92000 Nanterre (FR)
(72) Inventeur: BEYOU, Régis, 46182 LA CANADA - PATERNA (ES)
(74) Mandataire: Lavoix

(56) Documents cités:
- EP-A1- 2 703 154
- IT-A1-201800 005 548
- US-A1- 2014 312 641
- US-A1- 2016 355 145

## Description

La présente invention concerne un élément de garnissage pour véhicule, selon le préambule de la revendication 1.

US 2014/312641 A1 divulgue un élément de garnissage pour véhicule conformement au préambule de la revendication 1.

L'élément de garnissage est par exemple adapté à garnir un corps de planche de bord, une console centrale, un panneau de porte, un accoudoir ou autre.

Afin d'améliorer l'aspect esthétique du véhicule, la couche de peau et la couture peuvent constituer des éléments décoratifs de l'élément de garnissage.

Cependant, lors de la réalisation de la couture, le poinçonnement de l'aiguille à coudre dans le support peut engendrer la formation d'une ou plusieurs saillie(s) résiduelles sur le support, notamment sur les bords des trous de passage de l'aiguille à coudre à travers le support. Ces saillies sont souvent de petite taille et ont une forme irrégulière les rendant coupantes. Elles sont ainsi susceptibles d'abîmer voir de rompre la couture et d'entraîner un défaut inesthétique sur l'élément de décoration.

L'un des buts de l'invention est de pallier cet inconvénient en proposant un élément de garnissage dans lequel la couture de décoration et la couche de peau sont protégées tout en préservant l'esthétique de ladite couture et de ladite couche de peau.

A cet effet, l'invention concerne un élément de garnissage selon la partie caractérisante de la revendication 1.

Ainsi, la couture est protégée d'un éventuel endommagement dû aux saillies résiduelles du support par un élément de protection qui n'est pas visible depuis l'habitacle du véhicule.

Selon d'autres caractéristiques de l'invention, prises isolément ou selon toute combinaison techniquement envisageable, l'élément de garnissage est selon l'une quelconque des revendications 2 à 6.

L'invention concerne également un procédé de réalisation d'un élément de garnissage, selon la revendication 7.

Selon d'autres caractéristiques du procédé selon l'invention, prises isolément ou selon toute combinaison techniquement envisageable, le procédé est selon la revendication 8 ou 9.

D'autres aspects et avantages de l'invention apparaîtront à la lecture de la description qui suit, donnée à titre d'exemple et faite en référence aux dessins annexes, dans lesquels :
- La Figure 1 est une représentation schématique en coupe de l'élément de garnissage le long d'une ligne de couture,
- La Figure 2 est une représentation schématique en vue de face arrière d'un élément de garnissage,
- La Figure 3 est une représentation schématique en coupe d'une variante de l'élément de garnissage de la Fig. 1 le long d'une ligne de couture,
- La Figure 4 est une représentation schématique en vue de face arrière d'une variante de l'élément de garnissage de la Fig. 2.

Dans ce qui suit, les termes « externe », « extérieur » et « avant » désignent ce qui est tourné vers l'habitacle lorsque l'élément de garnissage est installé dans un véhicule. Les termes « interne », « intérieur » et « arrière » désignent ce qui est tourné vers l'élément sur lequel est installé l'élément de garnissage.

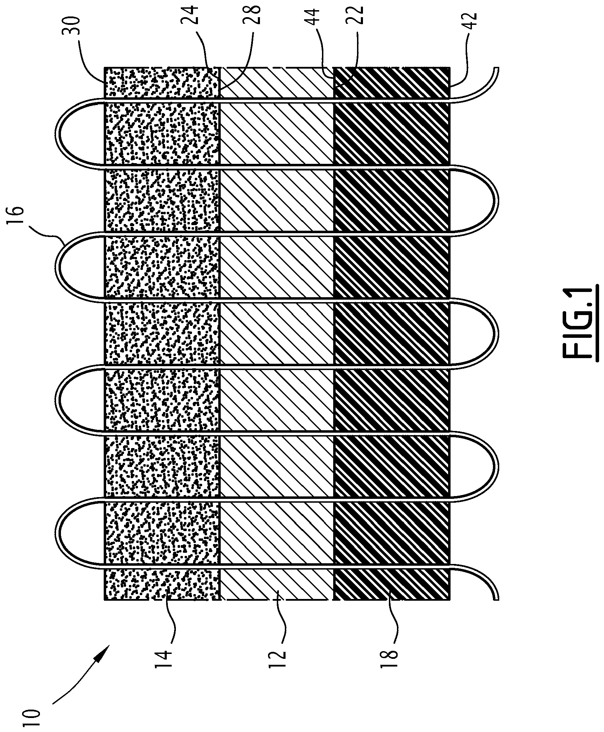

En référence à la Fig.1, on décrit un élément de garnissage 10 de véhicule comprenant au moins un support 12, au moins une couche de peau 14, au moins une couture 16 et au moins un élément de protection 18 de la couture 16.

Le support 12 de l'élément de garnissage 10 comprend une face interne 22 et une face externe 24.

Le support 12 est, par exemple, un couvercle de console centrale, un panneau de porte, un accoudoir ou tout autre élément de véhicule.

Le support 12 est, par exemple, formé par une matrice comprenant un matériau plastique. La matrice est par exemple en matériau thermodurcissable ou en matériau thermoplastique. Le support 12 est, par exemple, formé par un matériau composite comprenant une matrice plastique et des fibres, par exemple des fibres naturelles. Les fibres naturelles sont par exemples choisies parmi les fibres de kénaf, de chanvre, de lin, de bois.

Le support 12 confère à l'élément de garnissage 10 ses caractéristiques mécaniques telles que sa rigidité et sa résistance mécanique.

En outre, le support 12 confère à l'élément de garnissage 10 sa forme géométrique. En particulier, le support 12 peut être un élément tridimensionnel.

Le support 12 constitue, par exemple, une structure sur laquelle des éléments rapportés du véhicule sont fixés. Les éléments rapportés sont, par exemple, des circuits électroniques et/ou hydraulique, des bouches de ventilation et commandes de ventilation, des commandes de déplacement de vitres latérales. Dans le cas spécifique d'une console centrale, les éléments rapportés peuvent être, par exemple, en outre, un levier de vitesse et/ou un levier de frein de stationnement.

Le support 12 présente, par exemple, un module de flexion supérieur à 500 MPa. La rigidité du support 12 est donc suffisante pour supporter des éléments rapportés.

La couche de peau 14 est destinée à recouvrir au moins une partie du support 12 pour améliorer son aspect esthétique et pour lui conférer des caractéristiques de toucher particulières.

La couche de peau 14 comprend une face interne 28 et une face externe 30. La face externe 30 est destinée à être visible depuis l'habitacle du véhicule par un passager du véhicule lorsque l'élément de garnissage est installé dans le véhicule. La face externe 30 comprend, par exemple, des motifs, des couleurs et/ou des textures destinés à être appréciés par un observateur. La face interne 28 de la couche de peau 14 s'étend sur au moins une partie de la face externe 24 du support 12 et est fixée au support 12.

La face interne 28 de la couche de peau est, par exemple, fixée au support 12 par thermocollage, surmoulage ou thermo-gainage.

La couche de peau 14 épouse la forme de la partie du support 12 sur laquelle elle est fixée.

Selon un mode de réalisation, la couche de peau 14 recouvre toute la face externe 24 du support 12.

La couche de peau 14 est par exemple réalisée en un matériau textile, plastique, matériau ligneux, cuir ou simili-cuir.

Selon un mode de réalisation non représenté, une couche intermédiaire peut être placée entre le support 12 et la couche de peau 14. La couche intermédiaire permet par exemple de modifier les caractéristiques de toucher de la couche de peau 14. La couche intermédiaire est, par exemple, réalisée en une mousse. La mousse est par exemple en polyuréthane, en polypropylène ou en polyéthylène.

La couture 16 traverse le support 12 et la couche de peau 14. La couture 16 est par exemple un élément décoratif de l'élément de garnissage 10 et/ou assure la fixation du support 12, de la couche de peau 14 et de l'élément de protection 18 ensemble.

La couture 16 traverse le support 12 et la couche de peau 14 et s'étend sur la face externe 30 de la couche de peau 14 et sur la face interne 42 de l'élément de protection 18 en des points formant une ligne de couture 34.

Selon un mode de réalisation non représenté, la ligne de couture 34 s'étend le long d'une concavité du support 12. Ainsi, la couture 16 permet d'éviter le décollement de la couche de peau 14 le long de cette concavité et améliore le maintien de la couche de peau 14 sur le support 12.

La ligne de couture 34 forme, par exemple, un motif visible depuis l'extérieur de l'élément de garnissage 10 et remplit ainsi également une fonction de décoration de l'élément de garnissage.

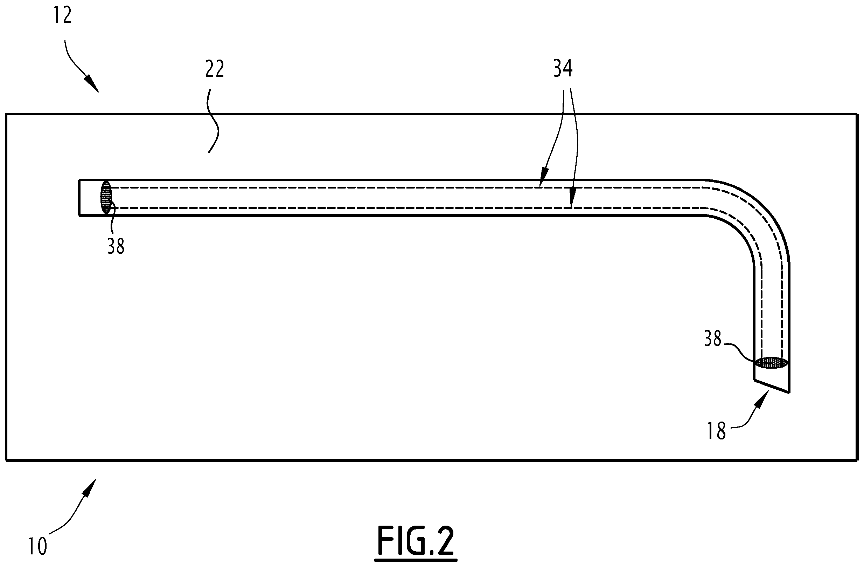

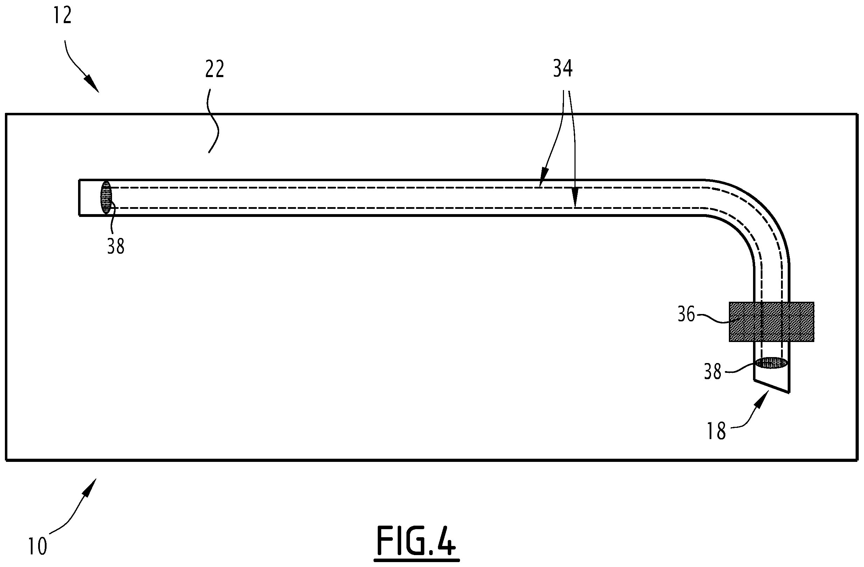

Selon un mode de réalisation dont un exemple est illustré sur les Fig. 2 et 4, l'élément de garnissage 10 comprend plusieurs coutures 16 formant une pluralité de lignes de couture 34 sur la face externe 30 de la couche de peau 14.

L'élément de protection 18, et plus particulièrement la face externe 44 de l'élément de protection 18, s'étend sur la face interne 22 du support 12 et en regard de la couture 16.

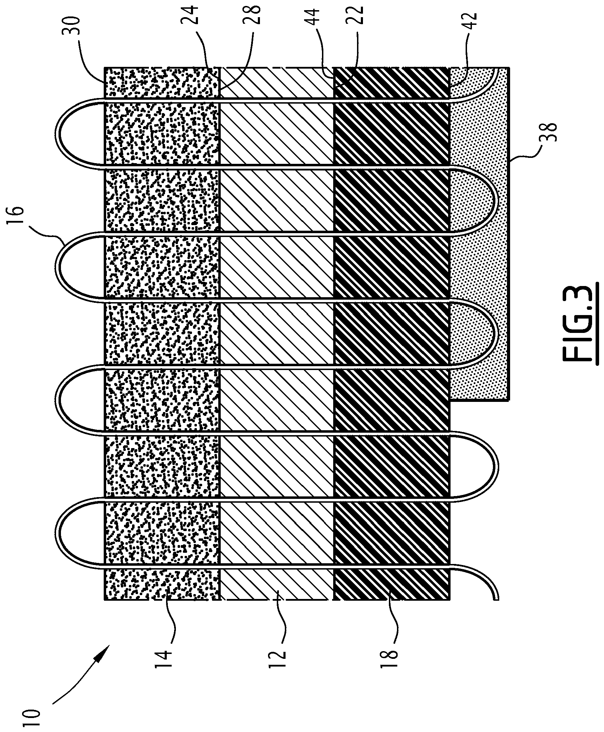

L'élément de protection 18 est également traversé par la couture 16. Ainsi, la couture 16 améliore le maintien du support 12, de la couche de peau 14 et de l'élément de protection 18, comme représenté sur les Fig. 1 et 3.

La couture 16 s'étend orthogonalement au support 12 depuis la face interne 42 de l'élément de protection 18 à la face externe 30 de la couche de peau 14.

Au moins un point d'arrêt arrête la couture 16. Le point d'arrêt de la couture 16 est situé du côté intérieur de l'élément de garnissage 10 sur l'élément de protection 18 de sorte à n'être pas visible depuis l'extérieur de l'élément de garnissage 10.

Selon un mode de réalisation, l'élément de protection 18 est réalisé en matériau plastique. L'élément de protection 18 est, par exemple, réalisé en un matériau en polyamide, en coton ou en polyester, notamment en polytéréphtalate d'éthylène. L'élément de protection 18 est sous forme d'un textile tissé ou non-tissé.

Par exemple, l'élément de protection 18 présente un grammage supérieur à 50 g/m², de préférence compris entre 80 g/m² et 100 g/m².

En référence aux Fig. 2 et 4, l'élément de protection 18 forme une bande s'étendant en regard de la couture 16 et suivant le tracé de la ligne de couture 34. Ainsi, si la couture 16 s'étend sur la face externe 30 de la couche de peau 14 selon un motif, l'élément de protection 18 forme le même motif sur la face interne 22 du support 12.

L'élément de protection 18 est donc un élément discret occupant une surface limitée de la face interne 22 du support 12.

L'élément de protection a, par exemple, une épaisseur de bande comprise entre 0,2 mm et 0,8 mm et une largeur de bande comprise entre 4 mm et 20 mm.

En référence à la Fig. 2, la couture 16 traverse la couche de peau 14, le support 12 et l'élément de protection 18 et s'étend sur la face externe 30 de la couche de peau 14 et sur la face interne 42 de l'élément de protection 18 en des points formant une ligne de couture 34.

Selon un mode de réalisation, l'élément de protection 18 et la couture 16 sont en outre fixés à la face interne 22 du support 12 par un adhésif 36. L'adhésif 36 permet de maintenir la tension de la couture 16. L'adhésif 36 est, par exemple, formé par un ruban adhésif, du type scotch^{®}.

La couture 16 peut, en outre, être arrêtée par un noeud constituant le point d'arrêt de la couture 16.

Selon une variante de ce mode de réalisation illustrée sur les Fig. 3 et 4, une couche de colle 38 fixe la couture 16 à l'élément de protection 18 et/ou à la face interne 22 du support 12. La colle 38 empêche la couture 16 de se défaire de l'élément de protection 18, du support 12 et de la couche de peau 14.

La colle 38 est, par exemple, une colle à base aqueuse composée de polyuréthane, une colle à base de solvant, une colle composée de cyanoacrylate ou une colle du type thermofusible, par exemple, une colle réactive ou non réactive composée de polyuréthane ou de polyoléfine.

Selon encore une autre variante de ce mode de réalisation, la couche de colle 38 ne fixe que le point d'arrêt de la couture 16 sur l'élément de protection 18 et/ou sur la face interne 22 du support 12. Par exemple, la couche de colle 38 fixe au moins le dernier point de couture de la couture 16, de préférence au moins les 3 derniers points de couture de la couture 16, à l'élément de protection 18. La couche de colle 38 fixe par exemple entre un et cinq points de couture de la couture 16 à l'élément de protection 18.

Ainsi, le point d'arrêt de la couture 16 est fixé sans qu'il ne soit nécessaire de réaliser une étape manuelle de fixation plus complexe, par exemple, par formation d'un noeud qui est plus longue à implémenter. En outre, la colle 38 permet de mieux contrôler la tension du fil de la couture 16.

La fixation du point d'arrêt de la couture 16 permet de maintenir la couture tendue ce qui permet d'obtenir un aspect satisfaisant et uniforme de la couture 16 sur la face externe 30 de la couche de peau 14. En outre, cette fixation permet d'empêcher que la couture 16 soit défaite.

Selon un mode de réalisation, l'élément de garnissage 10 comprend plusieurs coutures 16, un élément de protection 18 s'étendant sur la face interne 22 du support 12 en regard d'au moins une couture 16.

Selon une variante, un élément de protection 18 s'étend sur la face interne 22 du support 12 en regard d'une couture 16 pour chaque couture 16, chaque couture 16 étant alors protégée par un unique élément de protection 18.

Selon une autre variante, un élément de protection 18 s'étend sur la face interne 22 du support 12 en regard de plusieurs coutures 16.

Ainsi, chaque couture 16 est protégée par un élément de protection 18.

Dans ce qui suit, on décrit un procédé de réalisation d'un élément de garnissage 10 tel que décrit précédemment.

La face interne 28 de la couche de peau 14 est placée sur au moins une partie de la face externe 24 du support 12 de l'élément de garnissage 10. La couche de peau 14 est fixée au support 12, par exemple, par thermocollage, surmoulage ou thermo-gainage.

L'élément de protection 18 est placé sur la face interne 22 du support 12 en regard de la couche de peau 14.

La couture 16 est passée à travers l'élément de protection 18, le support 12 et la couche de peau 14 de l'intérieur vers l'extérieur.

La couture 34 est de préférence passée à travers l'élément de protection 18, le support 12 et la couche de peau 14 par une machine à coudre.

La couture 16 est ensuite passée régulièrement à travers l'élément de protection 18, le support 12 et la couche de peau 14 depuis l'extérieur vers l'intérieur puis depuis l'intérieur vers l'extérieur pour former une ligne de couture 34 visible depuis l'extérieur de l'élément de garnissage 10.

Selon un mode de réalisation, la couture 16 comprend un fil intérieur et un fil extérieur. Lors de la réalisation de la couture, l'aiguille de la machine à coudre passe le fil extérieur à travers la couche de peau 14, le support 12 et l'élément de protection 18 pour former une boucle sur la face interne 42 de l'élément de protection 18, puis la machine passe le fil intérieur dans la boucle formée par le fil supérieur. La machine à coudre passe alors le fil extérieur à travers l'élément de protection 18, le support 12 et la couche de peau 14 pour terminer le point de couture.

Pour terminer la couture 16 à une extrémité de la ligne de couture 34, le fil extérieur est amené du coté intérieur de l'élément de garnissage 10 afin d'avoir les deux extrémités des fils intérieur et extérieur du côté intérieur de l'élément de garnissage 10 de sorte qu'ils ne soient pas visible depuis l'extérieur.

Selon un mode de réalisation, avant le passage de la couture 16 à travers l'élément de protection 18, le support 12 et la couche de peau 14, l'élément de protection 18 est fixé à la face interne 22 du support 12 par un moyen de fixation pouvant être, par exemple, une colle.

Selon une variante de ce mode de réalisation, l'élément de protection 18 et la couture 16 sont fixés à la face interne 22 du support 12 par un adhésif 36. L'adhésif 36 permet de maintenir la tension de la couture 16 avant l'application de la colle 38.

Selon un mode de réalisation, la fixation de l'élément de protection 18 et la réalisation de la couture 16 est effectuée simultanément par une même machine à coudre. Une rainure de guidage de la machine à coudre approvisionne l'élément de protection 18 sur la face interne 22 du support et réalise la couture 16 à travers la couche de peau 14, le support 12 et l'élément de protection 18 qui vient juste d'être apposé.

Lorsque la réalisation de la couture 16 est terminée, un point d'arrêt de la couture 16 est réalisé.

Selon un mode de réalisation, la couture 16 est arrêtée par un noeud constituant le point d'arrêt de la couture 16.

Selon une variante illustrée sur les Fig. 3 et 4, après le passage de la couture 16 à travers l'élément de protection 18, le support 12 et la couche de peau 14, la couture 16 est fixée à l'élément de protection 18 et/ou au support 12 par une couche de colle 38. La couche de colle 38 empêche la couture 16 de se défaire de l'élément de protection 18, du support 12 et de la couche de peau 14.

Selon une variante, la couche de colle 38 est appliquée sur une extrémité de la couture 16 de préférence sur un point d'arrêt de la couture 16 pour fixer le point d'arrêt sur l'élément de protection 18 et/ou sur la face interne 22 du support 12. La couche de colle 38 fixe au moins le dernier point de couture de la couture 16, de préférence au moins les 3 derniers points de couture de la couture 16, à l'élément de protection 18.

L'élément de protection 18 proposé par l'invention permet de protéger la couture 16 d'un endommagement et d'une éventuelle rupture dû à un contact avec une saillie résiduelle du support 12 issue de la réalisation de la couture 16. L'élément de protection 18 tel que décrit n'est pas visible depuis l'extérieur de l'élément de garnissage 10 et n'affecte pas l'esthétique de la couche de peau 14.

Ainsi, l'élément de garnissage proposé par l'invention permet d'obtenir une couture 16 de décoration sur la couche de peau 14 protégée en évitant d'affecter l'esthétique de ladite couture 16 et de la couche de peau 14.

## Revendications

1. Elément de garnissage (10) pour véhicule comprenant :
- au moins un support (12), ledit support (12) comprenant une face interne (22) et une face externe (24),
- au moins une couche de peau (14) présentant une face interne (28) et une face externe (30), la face interne (28) de la couche de peau (14) s'étendant sur au moins une partie de la face externe (24) du support (12),
- au moins une couture (16) s'étendant sur la couche de peau (14), et
- au moins un élément de protection (18) de la couture (16) présentant une face interne (42) et une face externe (44) et s'étendant sur le support (12) en regard de la couture (16),
la face externe (44) de l'élément de protection (18) de la couture (16) s'étendant sur la face interne (22) du support (12), la couture (16) s'étendant de la face interne (42) de l'élément de protection (18) à la face externe (30) de la couche de peau (14),
**caractérisé en ce que** le support (12) comprend des fibres naturelles et une matrice en matériau plastique et **en ce que** l'élément de protection (18) est sous forme d'un textile tissé ou non-tissé.

2. Elément de garnissage (10) selon la revendication 1, comprenant une pluralité de coutures (16), un élément de protection (18) s'étendant sur la face interne (22) du support (12) en regard d'au moins une couture (16).

3. Elément de garnissage (10) selon la revendication 1 ou 2, dans lequel la couture (16) s'étend sur la face externe (30) de la couche de peau (14) de sorte à former une ligne de couture (34) visible depuis l'extérieur de l'élément de garnissage.

4. Elément de garnissage (10) selon l'une quelconque des revendications 1 à 3, dans lequel l'élément de protection (18) forme une bande s'étendant en regard de la couture (16) et suivant le tracé de la ligne de couture (34).

5. Elément de garnissage (10) selon l'une quelconque des revendications 1 à 4, dans lequel la face externe (44) de l'élément de protection (18) est fixé à la face interne (22) du support (12) par adhésion de la face externe (44) de l'élément de protection (18) sur la face interne (22) du support (12).

6. Elément de garnissage (10) selon l'une quelconque des revendications 1 à 5 dans lequel la couture (16) est fixée à la face interne (42) de l'élément de protection (18) et/ou à la face interne (22) du support (12) par une colle (38).

7. Procédé de réalisation d'un élément de garnissage selon l'une quelconque des revendications 1 à 6, le procédé comprenant les étapes suivantes :
- fixer la face interne (28) de la couche de peau (14) sur la face externe (24) du support (12),
- positionner la face externe (44) de l'élément de protection (18) sur la face interne (22) du support (12),
- passer la couture (16) à travers l'élément de protection (18), le support (12) et la couche de peau (14) de l'intérieur vers l'extérieur pour fixer ensemble la couche de peau (14), le support (12) et l'élément de protection (18).

8. Procédé selon la revendication 7, dans lequel avant le passage de la couture (16) à travers l'élément de protection (18), le support (12) et la couche de peau (14), l'élément de protection (18) est en outre fixé à la face interne (22) du support (12) par un élément de fixation.

9. Procédé selon la revendication 7 ou 8, dans lequel après le passage de la couture (16) à travers l'élément de protection (18), le support (12) et la couche de peau (14), un point d'arrêt de la couture (16) est en outre fixé à la face interne (42) de l'élément de protection (18) et/ou à la face interne (22) du support (12) par une colle (38).

## Patentansprüche

1. Verkleidungselement (10) für ein Fahrzeug, umfassend:
- mindestens einen Träger (12), der Träger (12) umfassend eine Innenfläche (22) und eine Außenfläche (24),
- mindestens eine Hautschicht (14), die eine Innenfläche (28) und eine Außenfläche (30) aufweist, wobei sich die Innenfläche (28) der Hautschicht (14) auf mindestens einem Teil der Außenschicht (24) des Trägers (12) erstreckt,
- mindestens eine Naht (16), die sich auf der Hautschicht (14) erstreckt, und
- mindestens eine Schutzelement (18) der Naht (16), das eine Innenfläche (42) und eine Außenfläche (44) aufweist und sich auf dem Träger (12) gegenüber der Naht (16) erstreckt, wobei sich die Außenfläche (44) des Schutzelements (18) der Naht (16) auf der Innenfläche (22) des Trägers (12) erstreckt, wobei sich die Naht (16) der Innenfläche (42) des Schutzelements (18) zu der Außenfläche (30) der Hautschicht (14) erstreckt,
**dadurch gekennzeichnet, dass** der Träger (12) natürliche Fasern und eine Matrix aus Kunststoffmaterial umfasst und dass das Schutzelement (18) in Form eines gewebten oder nicht gewebten Stoffes ist.

2. Verkleidungselement (10) nach Anspruch 1, umfassend eine Vielzahl von Nähten (16), wobei sich ein Schutzelement (18) auf der Innenfläche (22) des Trägers (12) gegenüber mindestens einer Naht (16) erstreckt.

3. Verkleidungselement (10) nach Anspruch 1 oder 2, wobei sich die Naht (16) auf der Außenfläche (30) der Hautschicht (14) so erstreckt, dass eine Nahtlinie (34) ausgebildet wird, die von der Außenseite des Verkleidungselements sichtbar ist.

4. Verkleidungselement (10) nach einem der Ansprüche 1 bis 3, wobei das Schutzelement (18) ein Band ausbildet, das sich gegenüber der Naht (16) erstreckt und dem Verlauf der Linie der Naht (34) folgt.

5. Verkleidungselement (10) nach einem der Ansprüche 1 bis 4, wobei die Außenfläche (44) des Schutzelements (18) an der Innenfläche (22) des Trägers (12) durch Haftung der Außenfläche (44) des Schutzelements (18) an der Innenfläche (22) des Trägers (12) fixiert ist.

6. Verkleidungselement (10) nach einem der Ansprüche 1 bis 5, wobei die Naht (16) an der Innenfläche (42) des Schutzelements (18) und/oder an der Innenfläche (22) des Trägers (12) durch einen Klebstoff (38) fixiert ist.

7. Verfahren zum Herstellen eines Verkleidungselements nach einem der Ansprüche 1 bis 6, das Verfahren umfassend die folgenden Schritte:
- Fixieren der Innenfläche (28) der Hautschicht (14) an der Außenfläche (24) des Trägers (12),
- Positionieren der Außenfläche (44) des Schutzelements (18) an der Innenfläche (22) des Trägers (12),
- Führen der Naht (16) durch das Schutzelement (18), den Träger (12) und die Hautschicht (14) von der Innenseite zu der Außenseite zum gemeinsamen Fixieren der Hautschicht (14), des Trägers (12) und des Schutzelements (18).

8. Verfahren nach Anspruch 7, wobei vor dem Führen der Naht (16) durch das Schutzelement (18), den Träger (12) und die Hautschicht (14) das Schutzelement (18) ferner an der Innenfläche (22) des Trägers (12) durch ein Fixierungselement fixiert wird.

9. Verfahren nach Anspruch 7 oder 8, wobei nach dem Führen der Naht (16) durch das Schutzelement (18), den Träger (12) und die Hautschicht (14) ein Verheftestich der Naht (16) ferner an der Innenfläche (42) des Schutzelements (18) und/oder an der Innenfläche (22) des Trägers (12) durch einen Klebstoff (38) fixiert wird.

## Claims

1. Trim element (10) for a vehicle comprising:
- at least one support (12), said support (12) comprising an inner face (22) and an outer face (24),
- at least one skin layer (14) having an inner face (28) and an outer face (30), the inner face (28) of the skin layer (14) extending over at least part of the outer face (24) of the support (12),
- at least one seam (16) extending over the skin layer (14), and
- at least one protective element (18) of the seam (16) having an inner face (42) and an outer face (44) and extending over the support (12) opposite the seam (16), the outer face (44) of the protective element (18) of the seam (16) extending over the inner face (22) of the support (12), the seam (16) extending from the inner face (42) of the protective element (18) to the outer face (30) of the skin layer (14),
**characterized in that** the support (12) comprises natural fibers and a matrix made of plastics material and **in that** the protective element (18) is in the form of a woven or non-woven fabric.

2. Trim element (10) according to claim 1, comprising a plurality of seams (16), a protective element (18) extending over the inner face (22) of the support (12) opposite at least one seam (16).

3. Trim element (10) according to either claim 1 or claim 2, wherein the seam (16) extends over the outer face (30) of the skin layer (14) so as to form a seam line (34) which is visible from the outside of the trim element.

4. Trim element (10) according to any of claims 1 to 3, wherein the protective element (18) forms a strip extending opposite the seam (16) and following the course of the seam line (34).

5. Trim element (10) according to any of claims 1 to 4, wherein the outer face (44) of the protective element (18) is attached to the inner face (22) of the support (12) by adhesion of the outer face (44) of the protective element (18) to the inner face (22) of the support (12).

6. Trim element (10) according to any of claims 1 to 5, wherein the seam (16) is attached to the inner face (42) of the protective element (18) and/or to the inner face (22) of the support (12) by an adhesive (38).

7. Method for producing a trim element according to any of claims 1 to 6, said method comprising the following steps:
- attaching the inner face (28) of the skin layer (14) to the outer face (24) of the support (12),
- positioning the outer face (44) of the protective element (18) to the inner face (22) of the support (12),
- passing the seam (16) through the protective element (18), the support (12) and the skin layer (14) from the inside to the outside in order to attach together the skin layer (14), the support (12) and the protective element (18).

8. Method according to claim 7, wherein before the seam (16) is passed through the protective element (18), the support (12) and the skin layer (14), the protective element (18) is further attached to the inner face (22) of the support (12) by a fastening element.

9. Method according to either claim 7 or claim 8, wherein after the seam (16) has been passed through the protective element (18), the support (12) and the skin layer (14), a stop point of the seam (16) is further attached to the inner face (42) of the protective element (18) and/or to the inner face (22) of the support (12) by an adhesive (38).
